# EUROPÄISCHE PATENTSCHRIFT

(11) **EP 4 059 689 B1**
(45) Veröffentlichungstag und Bekanntmachung des Hinweises auf die Patenterteilung: **18.09.2024**
(21) Anmeldenummer: 21163093.4
(22) Anmeldetag: 17.03.2021
(51) Int. Cl.: B29C 43/58, B29C 43/24, B29C 48/92, B29C 48/00, B29C 48/275, B29C 48/07, B29C 43/52, B29K 105/26, B29L 31/00

(54) **VERFAHREN UND PRODUKTIONSANLAGE ZUR EINFACHEN ABSONDERUNG VON BEI DER HERSTELLUNG EXTRUDIERTER PLATTEN ANFALLENDEM AUSSCHUSS**
METHOD AND PRODUCTION PLANT FOR THE SIMPLE SEPARATION OF WASTE ARISING DURING THE MANUFACTURE OF EXTRUDED SHEETS
PROCÉDÉ ET INSTALLATION DE PRODUCTION DESTINÉS À LA SÉPARATION SIMPLE DU REBUT OBTENU LORS DE LA FABRICATION DE PANNEAUX EXTRUDÉS

(43) Veröffentlichungstag der Anmeldung: 21.09.2022
(73) Patentinhaber: Akzenta Paneele + Profile GmbH, 56759 Kaisersesch (DE)
(72) Erfinder: HÜLLENKREMER, Felix, 56076 Koblenz (DE); WENDLING, Peter, 56290 Mörsdorf (DE)
(74) Vertreter: Michalski Hüttermann & Partner Patentanwälte mbB

(56) Entgegenhaltungen:
- GB-A- 2 282 985
- US-A1- 2005 006 820
- US-A1- 2010 109 185
- US-A1- 2019 016 024

## Beschreibung

Die Erfindung betrifft ein Verfahren und eine Produktionsanlage, mit deren Hilfe bei der Herstellung extrudierter Platten anfallender Ausschuss einfach abgesondert werden kann. Die extrudierten Platten können insbesondere zur Herstellung von Paneelen zur Abdeckung einer Oberfläche eines Raums verwendet werden.

Aus WO 2007/079845 A1 ist eine Produktionsanlage für aus Holz hergestellte Paneele bekannt, bei dem die gewünschte Paneellänge mit Hilfe eines Trennwerkzeugs von einem längeren Halbzeug abgetrennt werden kann.

Aus EP 3 578 384 A1 ist eine Produktionsanlage für aus Kunststoff hergestellte Paneele bekannt, bei dem zunächst ein plattenförmiges Endlosprofil hergestellt wird.

Aus US 2010/0109185 A1 ist es bekannt, dass ein extrudiertes Halbzeug als Ausschuss abzusondern, wenn nach einem Kühlschritt für das extrudierte Halbzeug in einem Welligkeitsmessschritt eine zu starke Welligkeit gemessen wird. Außerdem wird die Temperatur von Kalenderwalzen eines Extruders, die für den Kühlschritt verwendet werden, gemessen und geregelt, damit das extrudierte Halbzeug eine im Wesentlichen gleiche Temperatur in Breitenrichtung aufweist.

Es besteht ein ständiges Bedürfnis bei der Herstellung extrudierter Platten anfallenden Ausschuss einfach absondern zu können.

Es ist die Aufgabe der Erfindung Maßnahmen aufzuzeigen, die eine einfache Absonderung von bei der Herstellung extrudierter Platten anfallenden Ausschuss ermöglichen.

Die Lösung der Aufgabe erfolgt durch ein Verfahren mit den Merkmalen des Anspruchs 1 sowie eine Produktionsanlage mit den Merkmalen des Anspruchs 14. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Ein Aspekt der Erfindung betrifft ein Verfahren zur Absonderung von bei der Herstellung extrudierter Platten, insbesondere Paneele zur Abdeckung einer Oberfläche eines Raums, anfallendem Ausschuss, bei dem ein Extrudat eines Extruders einem mehrere temperierte Kalanderwalzen aufweisenden Kalander zugeführt wird, eine Ist-Temperatur mindestens einer Kalanderwalze gemessen wird, die Ist-Temperatur mit einer für diese Kalanderwalze vorgesehenen Soll-Temperatur verglichen wird und in dem Fall, dass eine Differenz zwischen der Ist-Temperatur und der Soll-Temperatur außerhalb eines vordefinierten Toleranzbetrags liegt, ein den Kalander verlassener Teil eines, insbesondere endlosen, Halbzeugs als Ausschuss abgesondert wird.

Das aus dem, insbesondere als Breitschlitzextruder ausgestalteten, Extruder stammende Extrudat ist in der Regel noch vergleichsweise warm und weich. Mit Hilfe der temperierten Kalanderwalzen des Kalanders kann das Extrudat durch Abkühlen verfestigt und in eine für ein Halbzeug gewünschte Form gewalzt werden. Der Kalander kann beispielsweise mindestens vier, mindestens sechs, mindestens acht oder noch mehr Kalanderwalzen aufweisen, um das Extrudat geeignet zu formen und/oder abzukühlen. Das den Kalander verlassene Halbzeug ist hierbei insbesondere als plattenförmiges Endlosprofil ausgestaltet. Zudem kann das den Kalander verlassene Halbzeug bereits eine hinreichend große Festigkeit aufweisen, dass eine Fördereinrichtung das Halbzeug von dem Extruder und von dem Kalander weg fördern kann.

In einem kontinuierlichen Betriebszustand einer zur Herstellung der extrudierten Platten vorgesehenen Produktionsanlage kann das Halbzeug den Kalander im Wesentlichen als ebene Platte verlassen, die gegebenenfalls nachfolgend noch geglättet und vereinzelt wird. In einem noch nicht kontinuierlichen Betrieb der Produktionsanlage, insbesondere in einem Anfahrbetrieb oder bei einer Betriebsstörung, kann es vorkommen, dass das den Kalander verlassene Halbzeug allerdings nicht eben, sondern wellig ausgeformt ist. Grundsätzlich kann es bei einer hinreichend geringen Welligkeit des Halbzeugs möglich sein bei einem nachfolgenden Glätten das Halbzeug von einer welligen Form in eine ebene Form zu bringen. Es wurde jedoch erkannt, dass dies zu lokalen Stauchungen und Dehnungen des Materials des Halbzeugs führt, die zu ungleichförmigen Materialeigenschaften der vereinzelten Platten führen, wodurch die Qualität der vereinzelten Platten beeinträchtigt ist. Insbesondere können die ungleichförmigen Materialeigenschaften in einem Veredelungsschritt das optische Erscheinungsbild beeinträchtigen, beispielsweise indem eingeprägte Strukturen unterschiedlich stark ausgeformt sind und/oder Farbpigmente unterschiedlich stark anhaften können. Um eine möglichst gute Qualität für die vereinzelten Platten zu erreichen, sollen die welligen Teile des Halbzeugs als Ausschuss abgesondert werden und nicht als verkaufsfähiges oder veredelbares Produkt weiterverwendet werden. Jedoch ist es nach dem Glätten schwierig die zuvor welligen Teile des Halbzeugs durch zerstörungsfreie Verfahren identifizieren zu können. Vor dem Glätten ist das Halbzeug noch vergleichsweise weich, so dass berührungsbehaftete Messverfahren zur Detektion der Welligkeit die Form des Halbzeugs beschädigen können, so dass im Wesentlichen nur berührungslose optische Verfahren zur Detektion der Welligkeit eingesetzt werden könnten, die jedoch aufwendig, schwierig durchzuführen und teuer sind.

Es wurde allerdings erkannt, dass eine direkte Detektion der Welligkeit des den Kalander verlassenden Halbzeugs tatsächlich gar nicht erforderlich ist. Insbesondere ist eine Quantifizierung der Welligkeit nicht erforderlich, wenn auch geringe Welligkeiten als nicht akzeptabel gelten, so dass eine indirekte qualitative Detektion der Welligkeit vollkommen ausreichend ist. Hierbei wird die Erkenntnis ausgenutzt, dass die Welligkeit des Halbzeugs sich auf von einer bestimmten Soll-Temperatur abweichende Ist-Temperatur der Kalanderwalzen zurückführen lässt. Wenn das durch verschiedene Soll-Temperaturen der Kalanderwalzen vorgesehene Temperaturprofil innerhalb des Kalanders nicht genau genug realisiert ist, können sich beispielsweise unterschiedliche ungeplante Slip/Stick-Effekte ergeben, bei denen das Material des Extrudats kürzer oder länger an der jeweiligen Kalanderwalze haftet und eine wellige Form für das Halbzeug erzeugt. Zudem wird die Ist-Temperatur der temperierten Kalanderwalze in der Regel sowieso gemessen und mit einer Soll-Temperatur verglichen, um eine der Kalanderwalze zugeordnete Kühl- und/der Heizeinrichtung regeln zu können, mit deren Hilfe die Temperatur der temperierten Kalanderwalze geregelt wird. Da die Position der Kalanderwalze, dessen Ist-Temperatur zu stark von der Soll-Temperatur abweicht, sowie die Fördergeschwindigkeit, mit der das Halbzeug von der Kalanderwalze weg bewegt wird, bekannt sind, können sehr leicht diejenigen Anteile des Halbzeugs berechnet und identifiziert werden, die eigentlich als Ausschuss behandelt werden sollen. Wenn in einem späteren Verfahrensschritt die Platten von dem Halbzeug vereinzelt werden, ist genau bekannt, welche vereinzelte Platte als Ausschuss oder als Produkt qualifiziert. Der Ausschuss kann dadurch nahezu ohne zusätzliche Messtechnik zur Identifizierung der welligen Anteile des Halbzeugs identifiziert werden und sehr leicht innerhalb des regulären Betriebs abgesondert werden ohne in den Produktionsablauf der Produktionsanlage signifikant eingreifen zu müssen. Es ist bereits ausreichend die als Ausschuss qualifizierenden Platten an einen anderen Ort zu fördern als die als Produkt qualifizierenden Platten. Durch die Behandlung desjenigen Teils des Halbzeugs, das an einer Kalanderwalze der falschen Temperatur ausgesetzt war, als Ausschuss, kann im Wesentlichen ohne zusätzlichen Messaufwand besonders einfach nicht den gewünschten Qualitätserfordernissen genügende Platten identifiziert werden, so dass eine einfache Absonderung von bei der Herstellung extrudierter Platten anfallenden Ausschuss ermöglicht ist.

Wenn die Ist-Temperatur nur innerhalb des Toleranzbetrags von der Soll-Temperatur abweicht, wird der entsprechende Teil des Halbzeugs nicht als Ausschuss identifiziert. Dadurch können Messungenauigkeiten und Rundungsfehler berücksichtigt werden, so dass eine gewisse zeitliche Trägheit bei der Temperaturregelung der jeweiligen Kalanderwalze zugelassen werden kann. Eine instabile Temperaturregelung für die Kalanderwalze kann dadurch vermieden werden. Zudem können die Herstellungskosten gering gehalten werden, ohne die Produktqualität zu beeinträchtigen. Eine übertrieben sensible beziehungsweise übertrieben vorsichtige Identifizierung von Ausschuss ist vermieden.

Das Extrudat kann unmittelbar nach dem Extrudieren mit einer Temperatur vorliegen, die sich in der Nähe des Schmelzpunktes des für das Halbzeug verwendeten Materials befindet. Auch nach dem Kalander kann das in dem Kalander bereits etwas abgekühlte Material des Halbzeugs vergleichsweise weich sein. In diesem Zustand lässt sich das Halbzeug kaum mit vertretbarem Kostenaufwand in der benötigten Präzision in einzelne Platten zerteilen. Daher kann das Halbzeug nach dem Kalander abgekühlt werden. Die Abkühlung kann hierbei mit Hilfe einer separaten Kühleinrichtung und/oder durch natürliche Konvektion erfolgen, während das Halbzeug mit Hilfe der Fördereinrichtung in Förderrichtung von dem Kalander weg abgeführt wird. Durch das Abkühlen des Halbzeugs verfestigt sich das Material des Halbzeugs und kann dadurch leichter einem Trennprozess unterworfen werden. Hierbei wurde erkannt, dass es einen optimalen Temperaturbereich gibt, in dem ein Trennen besonders kostengünstig und mit hoher Qualität durchgeführt werden kann. In diesem optimalen Temperaturbereich ist das Material des Halbzeugs noch warm genug, dass aufgrund der noch vorliegenden Duktilität ein mechanischer Widerstand gegen ein Eindringen eines Trennwerkzeugs gering ist. Ein Verschleiß des Trennwerkzeugs kann dadurch minimiert werden. Zudem wird ein Sprödbruch mit einer undefinierten Bruchfläche an der Trennstelle vermieden, so dass eine besonders glatte Trennfläche an der Trennstelle erreicht werden kann. Hierbei kann die Duktilität des Halbzeugs ausreichen, dass eine geringfügige Einschnürung an dem Beginn und dem Ende der Trennstelle entsteht, die eine scharfkantige Ecke zwischen der Trennfläche und der Oberseite sowie der Unterseite des plattenförmigen Halbzeugs an der Trennstelle vermeidet. Ein Kantenbrechen an der Trennstelle ist dadurch eingespart. Gleichzeitig ist das Material des Halbzeugs in dem optimalen Temperaturbereich bereits weit genug abgekühlt und hart genug, dass das Material nicht an dem Trennwerkzeug kleben bleibt oder sich unter der beim Trennen auftretenden Scherbelastung zu stark verformt. Die gewünschte Form der vereinzelten Platten kann mit einer hohen Präzision auch bei hohen Toleranzanforderungen sichergestellt werden, so dass eine hohe Maßhaltigkeit bei den vereinzelten Platten gegeben ist. Das Trennen des Materials kann im optimalen Temperaturbereich wie bei einem Schneiden durch Butter erfolgen.

Eine geeignete Zusammensetzung des extrudierten Halbzeugs ist beispielsweise in EP 3 578 384 A1 angegeben, auf deren diesbezüglicher Inhalt hiermit als Teil der Erfindung Bezug genommen wird. Als Material für das Halbzeugs eignet sich insbesondere ein thermoplastischer Kunststoff, beispielsweise Polypropylen (PP) sowie Homo- Co- oder Terpolymere des PP, Polyethylen (PE), thermoplastische Elastomere wie beispielsweise thermoplastische Polyolefine (TPO), thermoplastische Styrole (TPS), thermoplastisches Polyurethan (TPU), thermoplastische Vulkanisate (TPV) oder thermoplastische Copolyester (TPC). Sämtliche der zuvor genannten thermoplastischen Kunststoffe können in üblicher Weise auch Füllstoffe, wie z.B. Kreide, Schichtsilikate oder Gesteinsmehle aufweisen. Zur Anpassung der physikochemischen Eigenschaften der Kunststoffe kann es darüber hinaus vorgesehen sein, dass die Kunststoffe weitere, die entsprechenden Eigenschaften des Kunststoffs modifizierende Additive, wie z.B. Weichmacher, UV-Stabilisatoren, Antioxidantien, Flammschutzmittel, Antistatika, Schlagzähigkeitsmodifikatoren und/der Farbstoff aufweisen.

Die Fördereinrichtung kann insbesondere aus verschiedenen Teileinheiten zusammengesetzt sein, deren jeweilige Fördergeschwindigkeit gleich oder unterschiedlich eingestellt sein können. Durch in verschiedenen Teilbereichen unterschiedlich eingestellte Fördergeschwindigkeiten kann insbesondere eine durch eine Abkühlung im Ausmaß eines thermisch bedingten Schrumpfmaßes bedingte Längenverringerung des jeweils geförderten Profils kompensiert werden, so dass durch Wärmedehnungseffekte verursachte unnötige Spannungen in dem geförderten Profil vermieden werden können. Insbesondere kann die Fördereinrichtung, beispielsweise im Bereich einer Vereinzelungseinrichtung, unterbrochen sein, damit die Vereinzelungseinrichtung einen quer zur Förderrichtung verlaufenden durchgängigen Trennschnitt durchführen kann. Hierbei kann die in Förderrichtung nach der Vereinzelungseinrichtung vorgesehene Teileinheit der Fördereinrichtung eine größere Fördergeschwindigkeit als eine in Förderrichtung vor der Vereinzelungseinrichtung vorgesehene Teileinheit der Fördereinrichtung aufweisen, so dass die Vereinzelung der abgetrennten Platten verbessert sein kann. Die Fördereinrichtung beziehungsweise die jeweilige Teileinheit der Fördereinrichtung kann beispielsweise aktiv angetriebene und/oder passiv mitdrehende Rollen und/oder ein in Förderrichtung bewegtes Band aufweisen, um das jeweilige Profil in Förderrichtung fördern zu können. Wenn die Fördereinrichtung als Antriebsmittel zum Fördern des Halbzeugs nur angetriebene Rollen aufweist, ist es möglich zwischen den Rollen einen die natürliche Konvektion zur Abkühlung des Halbzeugs begünstigenden Abstand vorzusehen, wobei der Abstand zwischen einander nachfolgenden Rollen gering genug ist, dass eine Wellenbildung des Halbzeugs in einem noch nicht verfestigten und eher weichen Teilbereich vermieden ist. Die Fördereinrichtung ist zumindest bis zur Vereinzelungseinrichtung insbesondere geradlinig, das heißt ohne Kurven oder Abbiegungen, ausgeführt, so dass das Halbzeug ohne Biegungen entlang einer, vorzugsweise in einer Horizontalebene liegenden, Geraden gefördert werden kann.

Die als Produkt und nicht als Ausschuss qualifizierenden vereinzelten Platten können insbesondere zu Paneelen weiterverarbeitet werden, mit dessen Hilfe eine Oberfläche eines Raums abgedeckt werden kann. Beispielsweise können die Paneele als Bodenlaminat einen optisch ansprechenden Fußboden des Raums ausbilden. Das Paneel kann einen auf einen Quader als Grundform basierenden Paneelkörper aufweisen, dessen Längserstreckung in der Regel deutlich größer als seine Quererstreckung ist, während die Dicke des Paneelkörper in Dickenrichtung in der Regel kleiner als seine Quererstreckung ist. Der Paneelkörper kann insbesondere durch die vereinzelte Platte oder einem nach mindestens einem weiteren Zerteilen der Platte vorliegenden Plattenkörper ausgebildet sein. Der Paneelkörper kann an der einen in Längsrichtung verlaufenden Langseite einen insbesondere in Längsrichtung durchgängig verlaufenden und in Querrichtung abstehenden Spund-Ansatz und an der anderen Seite eine in Querrichtung in dem Paneelkörper eingebrachte Spund-Nut aufweisen, so dass im Wesentlichen identisch ausgestaltete Paneele an den Langseiten anliegend über eine als Spundung ausgestaltete Feder-Nut-Verbindung miteinander verbunden werden können. Zudem kann von der in Querrichtung verlaufenden Kurzseite des Paneelkörpers ein Arretierhaken in Längsrichtung abstehen, während an der anderen Kurzseite des Paneelkörpers ein Federkörper abstehen kann, der eine Aufnahmenut begrenzt, so dass im Wesentlichen identisch ausgestaltete Paneele auch an ihren Kurzseiten über eine Feder-Nut-Verbindung miteinander verrastet werden können. Bei der Montage kann das eine Paneel auf einem eine Gebrauchsebene definierenden Untergrund, beispielsweise ein Boden, eine Seitenwand oder eine Decke eines Raums, flächig aufliegen. Das weitere Paneel kann gegebenenfalls beispielsweise unter einem Winkel von ca. 30° leicht angeschrägt mit einem seitlich neben dem Paneel verlaufenden bereits montierten Paneel an der Langseite angesetzt und danach auf den Untergrund geschwenkt werden, wodurch die Feder-Nut-Verbindung zwischen dem Arretierhaken des Paneels und der Aufnahmenut des weiteren Paneel hergestellt werden kann.

Insbesondere wird das den Kalander verlassene Halbzeug einem Glättwerk zum Glätten einer Oberseite und/oder einer Unterseite des Halbzeugs, insbesondere mit einer definierten Oberflächengüte, zugeführt, wobei das Glätten durch das Glättwerk unterbleibt, wenn der dem Glättwerk zugeführte Teil des Halbzeugs zuvor einer um den vordefinierten Toleranzbetrags von der Soll-Temperatur abweichenden Ist-Temperatur einer der Kalanderwalzen ausgesetzt war. Da bereits über die Temperaturmessung in der Kalanderwalze diejenigen Teilbereiche des Halbzeugs identifiziert werden können, die später als Ausschuss abgesondert und nicht als Produkt weiterverarbeitet werden, kann diese Information bereits im Glättwerk genutzt werden. Das durch das Glättwerk geförderte Halbzeug wird in dem Glättwerk im Wesentlichen nur in den Teilbereichen geglättet, die nicht im Kalander als Ausschuss identifiziert wurden. Dadurch ist es nicht erforderlich mit zusätzlichen Energieeinsatz Teilbereiche des Halbzeugs einem Glätten auszusetzen, die später als Ausschuss abgesondert werden. Die Herstellungskosten und der Verschleiß im Glättwerk können dadurch reduziert werden.

Vorzugsweise schließt sich das Glättwerk nahezu unmittelbar an dem Kalander an. Da eine Messung der Welligkeit des Halbzeugs zwischen dem Kalander und dem Glättwerk eingespart werden kann, ist es möglich das Glättwerk so nah wie möglich zum Kalander vorzusehen. Das Halbzeug ist dadurch noch besonders weich und weniger stark durch natürliche Konvektion abgekühlt und verfestigt, so dass das Glättwerk besonders einfach die gewünschte Form und Oberflächenbeschaffenheit des Halbzeugs erreichen kann. Bei einem reduzierten Bauraumbedarf kann die Glättfunktion im Gättwerk verbessert werden.

Besonders bevorzugt wird das Halbzeug nach einem Abkühlen und Verfestigen zu einem Endlosgrundprofil einer Vereinzelungseinrichtung zum Abtrennen von vereinzelten Platten von dem Endlosgrundprofil, insbesondere entlang einer quer zur Förderrichtung verlaufenden Trennlinie, zugeführt, wobei Platten, die aus einem Teil des Endlosgrundprofil, das zuvor einer um den vordefinierten Toleranzbetrags von der Soll-Temperatur abweichenden Ist-Temperatur einer der Kalanderwalzen ausgesetzt war, vereinzelt wurden, als Ausschuss abgesondert werden. In der sowieso vorgesehenen Vereinzelungseinrichtung wird das zu einem Endlosgrundprofil verfestigte Halbzeug in mehrere Platten mit einer gewünschten Geometrie zerteilt. Diejenigen vereinzelten Platten, die zumindest teilweise aus einem als Ausschuss betrachteten Teil des Endlosgrundprofils bestehen, werden hierbei abgesondert und nicht mit den als Produkt betrachteten Platten vermischt. Die Absonderung der Ausschussware kann dadurch besonders einfach und effizient erfolgen, ohne hierzu in den Herstellungsprozess der Produktionsanlage einzugreifen. Die Ausschussware darstellenden abgesonderten Platten weisen hierbei eine definierte Form auf, die eine automatisierte Weiterverarbeitung der als Ausschuss qualifizierenden Platten erleichtert. Beispielsweise kann eine Zerkleinerungseinrichtung zum Schreddern der als Ausschuss abgesonderten Platten leichter und zielgerichteter dimensioniert werden, so dass eine besonders effiziente Weiterverarbeitung der als Ausschuss abgesonderten Platten erfolgen kann.

Die Vereinzelungseinrichtung kann die Platte mit Hilfe eines Trennwerkzeugs entlang der Trennlinie von dem Endlosgrundprofil abtrennen. Das Abtrennen der jeweiligen Platte erfolgt insbesondere durch ein spanloses Trennverfahren, insbesondere Abscheren an einer Messerschneide, so dass abgetrennte Späne, welche die Vereinzelungseinrichtung verschmutzen und beeinträchtigen könnten oder die Oberflächen der Platte und/oder des Endlosgrundprofils beeinträchtigen, vermieden sind. Hierbei wird die Erkenntnis ausgenutzt, dass das Endlosgrundprofil auch nach einer zwischenzeitlichen leichten Abkühlung noch im optimalen Temperaturbereich vorliegen kann und vergleichsweise weich und duktil ist, so dass ein verschleißarmes Abtrennen der Platte durch ein spanloses Abscheren leicht durchgeführt werden kann. Insbesondere ist das Trennwerkzeug der Vereinzelungseinrichtung mit der Fördergeschwindigkeit des Endlosgrundprofis in Förderrichtung mitbewegbar ausgestaltet. Durch das Mitbewegen des Trennwerkzeug in Förderrichtung mit der gleichen Geschwindigkeit wie das Endlosgrundprofil kann eine saubere Schnittkante erzeugt werden, wie sonst nur bei einem Schneiden eines unbeweglichen Werkstücks erzeugt werden könnte. Eine angeschrägte Schnittfläche der Platte kann dadurch vermieden werden, so dass die Platte im Wesentlichen einem Quader entspricht.

Insbesondere erfolgt eine Identifizierung als Ausschuss in dem Kalander ausschließlich auf Grundlage der gemessenen Ist-Temperatur der mindestens einen Kalanderwalze. Eine weitere Messung, insbesondere eine berührende oder berührungslose Messung einer Welligkeit der Platten, ist gerade nicht vorgesehen und eingespart. Dadurch ist es nicht erforderlich in der Vereinzelungseinrichtung zusätzliche Messtechnik zu vorzusehen. Das automatisierte Aussondern von Ausschuss kann ohne signifikante Eingriffe in die einzelnen Herstellungsstationen der Produktionsanlage erfolgen.

Vorzugsweise wird der Teil des Endlosgrundprofils in der Vereinzelungseinrichtung, das zuvor einer um den vordefinierten Toleranzbetrags von der Soll-Temperatur abweichenden Ist-Temperatur einer der Kalanderwalzen ausgesetzt war, auf Basis einer Fördergeschwindigkeit des Endlosgrundprofils entlang einer Förderrichtung und eines Abstands der Vereinzelungseinrichtung zum Kalander entlang der Förderrichtung identifiziert. Die Fördergeschwindigkeit der Fördereinrichtung sowie der Abstand der Vereinzelungseinrichtung zum Kalander sind bekannt oder können leicht durch Messung ermittelt werden. Dadurch lässt sich sehr einfach bestimmen mit welcher Zeitverzögerung derjenige Teil des Halbzeugs, bei dem die Kalanderwalze nicht die richtige Temperatur hatte, als von dem verfestigten Endlosgrundprofil abgetrennte Platte vorliegt. Die so als Ausschussware identifizierte Platte kann dann leicht von der Vereinzelungseinrichtung und den als Produkt betrachteten Platten abgeführt werden.

Besonders bevorzugt wird das Halbzeug nach einem Abkühlen und Verfestigen zu einem Endlosprofil einer Kantenschneideinrichtung zum Abtrennen eines zur Förderrichtung seitlichen Randbereichs des Halbzeugs, so dass in Förderrichtung nach der Kantenschneideinrichtung das Halbzeug als plattenförmiges Endlosprofil mit einer quer zur Förderrichtung verlaufenden vordefinierten Grundplattenbreite vorliegt, zugeführt, wobei die in der Kantenschneideinrichtung abgetrennten Randbereiche als Ausschuss abgesondert werden. Die Kantenschneideinrichtung kann grundsätzlich unabhängig davon, ob der gerade in der Kantenschneideinrichtung vorliegende Teil des Endlosprofils als Ausschuss oder Produkt qualifiziert, die Randbereiche abtrennen. Vorzugsweise wird die Kantenschneideinrichtung erst dann zum Abtrennen der Randstreifen aktiviert, wenn der der Kantenschneideinrichtung zugeführte Teil des Endlosprofils als Produkt qualifiziert wird. Die Kantenschneideinrichtung braucht dadurch nicht zum Abtrennen von einem welligen Körper ausgelegt zu sein und/oder unnötiger Verschleiß kann vermieden werden. Da die abgetrennten Randbereiche und die als Ausschuss abgesonderten Platten aus dem gleichen Material bestehen, ist es problemlos möglich sowohl die abgetrennten Randbereiche als auch die als Ausschuss abgesonderten Platten gemeinsam weiterzuverarbeiten, insbesondere zu recyclen. Gegebenenfalls können die abgetrennten Randbereiche und die als Ausschuss abgesonderten Platten zuvor zerkleinert werden, so dass die zerkleinerten Randbereiche und die zerkleinerten Platten gleichartig ausgeformt sind und sich nicht wesentlich unterscheiden. Die Weiterverarbeitung, insbesondere das Recycling, der Ausschussware ist dadurch vereinfacht.

Die Kantenschneideeinrichtung kann die über die über die gewünschte Grundplattenbreite hinausgehenden Randbereiche insbesondere kontinuierlich abtrennen. Hierzu kann das Halbzeug beispielsweise gegen ein feststehendes Messer oder Schneidrolle anlaufen. Das Abtrennen der Randbereiche erfolgt insbesondere durch ein spanloses Trennverfahren, insbesondere Abscheren an einer Messerschneide, so dass abgetrennte Späne, welche die Kantenschneideeinrichtung verschmutzen und beeinträchtigen könnten oder die Oberflächen des Endlosprofils beeinträchtigen, vermieden sind. Hierbei wird die Erkenntnis ausgenutzt, dass das Halbzeug im optimalen Temperaturbereich vergleichsweise weich und duktil vorliegt, so dass ein verschleißarmes Abtrennen der Randbereiche durch ein spanloses Abscheren leicht durchgeführt werden kann. Zudem ist es möglich die abgetrennten Randbereiche als streifenförmiges Endlosprofil abzutrennen, die nachfolgend in Teilstücke gleichartiger Größe und Form, insbesondere als Granulat, zerkleinert werden können. Dies erleichtert die weitere Verarbeitung der abgetrennten Randbereiche.

Zwischen der Kantenschneideinrichtung und der Vereinzelungseinrichtung kann ausreichend Bauraum geschaffen werden, um die in der Kantenschneideinrichtung abgetrennten Randbereiche weiter zu verarbeiten. Hierzu kann der Bauraum zwischen der Kantenschneideinrichtung und der Vereinzelungseinrichtung unterhalb des Endlosprofils sowie der zur Förderung des Endlosprofils vorgesehenen Förderelemente der Förderrichtung vorgesehen werden. Die Weiterverarbeitung der abgetrennten Randbereiche kann sich dadurch unmittelbar an die Kantenschneideinrichtung anschließen, ohne dass hierzu ein Bauraum der Produktionsanlage quer zur Förderrichtung signifikant vergrößert werden müsste. Stattdessen kann die Weiterverarbeitung der abgetrennten Randbereiche in einer Aufstellfläche vorgesehen sein, die sowieso schon von der Fördereinrichtung genutzt wird, wobei für die Weiterverarbeitung der abgetrennten Randbereiche in einem von der Fördereinrichtung eher weniger genutzter Höhenbereich vorgesehen werden kann. Die Weiterverarbeitung der abgetrennten Randbereiche kann dadurch im Wesentlichen nahezu bauraumneutral erfolgen.

In Förderrichtung zwischen der Kantenschneideinrichtung und der Vereinzelungseinrichtung kann vorzugsweise ein Sammelbehälter zum Sammeln der in der Kantenschneideinrichtung abgetrennten Randbereiche angeordnet sein. Die als streifenförmiges Endlosprofil abgetrennten Randbereiche können vor dem Trennwerkzeug der Kantenschneideinrichtung noch mit dem Halbzeug verbunden sein, so dass die abgetrennten Randbereiche in Förderrichtung hinter dem Trennwerkzeug der Kantenschneideinrichtung nur leicht seitlich beabstandet zu dem Endlosprofil verlaufen können. Die abgetrennten Randbereiche können dadurch leicht dem zwischen der Kantenschneideinrichtung und der Vereinzelungseinrichtung vorgesehenen Sammelbehälter zugeführt werden, ohne dass die als streifenförmiges Endlosprofi abgetrennten Randbereiche unkontrolliert abbrechen können. Die abgetrennten Randbereiche können dadurch leicht kontinuierlich abgeführt und in dem Sammelbehälter gesammelt werden. Die als streifenförmiges Endlosprofil abgetrennten Randbereiche können in dem Sammelbehälter in kleinere Stücke zerbrechen oder vorher definiert zerkleinert werden. Vorzugsweise werden die abgetrennten Randbereiche in mindestens einer, insbesondere als Schneidmühle ausgestalteten, Zerkleinerungseinrichtung, insbesondere zu schüttfähigen Granulat, zerkleinert und als Granulat dem Sammelbehälter und/oder einem Recyclingbehälter zugeführt. Der Sammelbehälter kann insbesondere durch eine Relativbewegung quer zur Förderrichtung wegbewegt und durch einen noch leeren Sammelbehälter ersetzt werden, so dass die abgetrennten Randbereiche batch-weise weggebracht werden können. Vorzugsweise werden die abgetrennten Randbereiche kontinuierlich abgeführt.

Der Sammelbehälter kann insbesondere in Schwerkraftrichtung unterhalb des Endlosprofils angeordnet sein, wobei insbesondere das Endlosprofil den Sammelbehälter in Schwerkraftrichtung betrachtet zumindest zu einem Großteil überdeckt. Der Sammelbehälter kann auf einem hinreichend niedrigen Niveau zur Aufnahme der gegebenenfalls bereits zerkleinerten abgetrennten Randstreifen in zu dem Endlosprofil zumindest teilweise seitlich versetzt und/oder von dem Endlosprofil überdeckt unterhalb des Endlosprofils vorgesehen sein. Ein seitliches Überstehen des Sammelbehälters über die seitliche Erstreckung des Endlosprofils hinaus kann dadurch gering gehalten oder sogar ganz vermieden werden. Der Bauraumbedarf kann dadurch minimiert werden. Zudem ist es leicht möglich den Sammelbehälter nach oben hin offen auszugestalten, so dass durch eine Sichtprüfung leicht erkannt werden kann, ob der Sammelbehälter durch einen leeren Sammelbehälter ausgetauscht werden sollte. Die oberhalb des Sammelbehälters vorgesehenen Bauteile der Fördereinrichtung, insbesondere Rollen, und/oder das Material des Endlosprofils können die nach oben offene Öffnung des Sammelbehälters überdecken und aus dem Inneren des Sammelbehälters hochspringende abgebrochene Stücke des abgetrennten Randbereichs zurückhalten.

Insbesondere wird der abgesonderte Ausschuss, insbesondere im Wesentlichen vollständig, in einen Recyclingbehälter gefördert, wobei der Recyclingbehälter zur zumindest teilweisen und/oder zeitweiligen Beaufschlagung eines Extruders zur Erzeugung des Halbzeugs mit einem aus dem Recyclingbehälter stammenden Edukt mit dem Extruder verbindbar ist. Die Materialzusammensetzung der in den Recyclingbehälter geförderten Ausschussware entspricht nahezu identisch dem Edukt, das dem Extruder zur Erzeugung des Extrudats zugeführt wird. Dies erleichtert ein nahezu vollständiges Recycling, bei dem annährend 100% des Ausschusses wiederverwendet werden können. Das aus dem Recyclingbehälter stammende Edukt für den Extruder kann insbesondere mit einem nicht-recycelten ("virginen") Edukt vermischt werden. Vorzugsweise wird das Gewicht des Inhalts des Recyclingbehälter gemessen, beispielsweise indem der Recyclingbehälter auf mindestens einer Wägezelle steht, so dass das aus dem Recyclingbehälter stammende Edukt für den Extruder kontinuierlich mit einem definierten und bekannten Massenstrom dem Extruder zudosiert werden kann.

Vorzugsweise wird der abgesonderte Ausschuss in mindestens einer, insbesondere als Schneidmühle ausgestalteten, Zerkleinerungseinrichtung, insbesondere zu schüttfähigen Granulat, zerkleinert. Im zerkleinerten Zustand kann der Ausschuss leichter transportiert und portioniert werden. Da bei einem Recycling zu Edukt für den Extruder der zerkleinerte Ausschuss sowieso aufgeschmolzen wird, ist es nicht erforderlich den Ausschuss zu besonders kleinen Korngrößen, beispielsweise Sand oder Staub, zu zermahlen. Ein unnötiger Energieeinsatz beim Zerkleinern des Ausschusses wird dadurch vermieden.

Besonders bevorzugt wird die Ist-Temperatur der Kalanderwalze an einer Außenseite der Kalanderwalze bestimmt. Die Temperaturbestimmung der Außenseite der Kalanderwalze kann hierbei direkt oder indirekt erfolgen. Anstatt eine Kerntemperatur der Kalanderwalze zu bestimmen kann über die Bestimmung der Außenseitentemperatur der Kalanderwalze die Temperaturmessung an einer Messstelle erfolgen, die für die Qualität des Halbzeugs besonders relevant ist. Die Identifikation von Teilbereichen des Halbzeugs als Ausschuss oder Produkt kann dadurch mit einer höheren Genauigkeit and Validität erfolgen. Eine Verfälschung der Temperaturmessung durch Wärmeleitungseffekte innerhalb der Kalanderwalze, insbesondere während einer Anfahrphase, ist dadurch vermieden.

Insbesondere wird die Ist-Temperatur der Kalanderwalze an mehreren Messstellen der selben Kalanderwalze bestimmt, wobei in dem Fall, dass die Differenz zwischen der Ist-Temperatur und der Soll-Temperatur der Kalanderwalze an mindestens einer Messstelle außerhalb des vordefinierten Toleranzbetrags liegt, der den Kalander verlassene Teil des Halbzeugs als Ausschuss abgesondert wird. Dies ermöglicht es eine Temperaturverteilung innerhalb der Kalanderwalze zu messen. Vorzugsweise ist es möglich die Ist-Temperatur der Kalanderwalze über den gesamten Umfang an mehreren zueinander in Umfangsrichtung und/oder in axialer Richtung versetzten Messstellen vorzugsweise an der Außenseite der Kalanderwalze zu messen. Die Identifikation von Teilbereichen des Halbzeugs als Ausschuss oder Produkt kann dadurch mit einer höheren Genauigkeit and Validität erfolgen.

Vorzugsweise wird die Ist-Temperatur mehrerer, insbesondere sämtlicher, Kalanderwalzen des Kalanders gemessen und mit der zugehörigen Soll-Temperatur verglichen, wobei in dem Fall, dass die Differenz zwischen der Ist-Temperatur und der Soll-Temperatur mindestens einer Kalanderwalze außerhalb des vordefinierten Toleranzbetrags liegt, der den Kalander verlassene Teil des Halbzeugs als Ausschuss abgesondert wird. Dadurch kann bereits ein Ausschuss identifiziert werden, wenn nur eine der Kalanderwalzen nucht die korrekte Ist-Temperatur aufweist. Dadurch kann berücksichtigt werden, dass insbesondere während einer Anfahrphase die Kalanderwalzen unterschiedlich schnell ihre Soll-Temperatur erreichen. Die Identifikation von Teilbereichen des Halbzeugs als Ausschuss oder Produkt kann dadurch mit einer höheren Genauigkeit and Validität erfolgen.

Besonders bevorzugt gilt für den Toleranzbetrag ΔT 0,5 K ≤ ΔT ≤ 10,0 K, insbesondere 1,0 K ≤ ΔT ≤ 5,0 K und vorzugsweise 1,5 K ≤ ΔT ≤ 2,5 K. Bei einem derartigen von der Soll-Temperatur abweichenden Toleranzbetrag der Ist-Temperatur ist eine Welligkeit des Halbzeugs und/oder Qualitätseinbußen des vereinzeten Platten durch eine ungleichmäßige Dichteverteilung im Halbzeug nicht zu erwarten. Der Menge an Ausschuss kann dadurch auf das erforderliche Minimum begrenzt werden.

Insbesondere erfolgt ein Abkühlen und Verfestigen des Halbzeugs zu einem, insbesondere plattenförmigen, Endlosprofil ausschließlich durch natürliche Konvektion. Ein zu steiler Temperaturgradient in dem Halbzeug, der zu Verspannungen innerhalb des Materials des Halbzeugs führen könnte, wird dadurch vermieden.

Ein weiterer Aspekt der Erfindung betrifft eine Produktionsanlage zur Herstellung extrudierter Platten, insbesondere für Paneele zur Abdeckung einer Oberfläche eines Raums, mit einem Extruder zur Erzeugung eines Extrudat, einem mehrere temperierte Kalanderwalzen aufweisender Kalander zur Erzeugung eines als plattenförmiges Endlosprofil ausgestalteten Halbzeugs aus dem Extrudat, wobei mindestens eine Kalanderwalze einen Temperatursensor zur Messung einer Ist-Temperatur der Kalanderwalze aufweist, einer Fördereinrichtung zur Förderung des Halbzeugs entlang einer Förderrichtung mit einer definierten Fördergeschwindigkeit, einer Vereinzelungseinrichtung zum Abtrennen vereinzelter Platten von dem zu einem Endlosgrundprofil verfestigten Halbzeug, insbesondere entlang einer quer zur Förderrichtung verlaufenden Trennlinie, und einer zur Durchführung des Verfahrens, das wie vorstehend beschrieben aus- und weitergebildet sein kann, hergerichteten Absonderungseinrichtung zur Absonderung von denjenigen Platten als Ausschuss, die aus einem Teil des Endlosgrundprofils, das zuvor einer um den vordefinierten Toleranzbetrags von der Soll-Temperatur abweichenden Ist-Temperatur einer der Kalanderwalzen ausgesetzt war, abgetrennt wurden. Die Produktionsanlage kann insbesondere wie vorstehend anhand des Verfahrens beschrieben aus- und weitergebildet sein. Durch die Behandlung desjenigen Teils des Halbzeugs, das an einer Kalanderwalze der falschen Temperatur ausgesetzt war, als Ausschuss, kann im Wesentlichen ohne zusätzlichen Messaufwand besonders einfach nicht den gewünschten Qualitätserfordernissen genügende Platten identifiziert werden, so dass eine einfache Absonderung von bei der Herstellung extrudierter Platten anfallenden Ausschuss ermöglicht ist.

Die Absonderungseinrichtung kann insbesondere Teil der Vereinzelungseinrichtung sein. Die Absonderungseinrichtung kann einen Input-Port zum Einlesen mindestens einer Ist-Temperatur von mindestens einer Kalanderwalze aufweisen. Die Absonderungseinrichtung kann eine Rechnereinheit aufweisen, in der überprüft wird, ob die an einer bestimmten Messstelle gemessene Ist-Temperatur der Kanalderwalze stärker von der für diese Messstelle vorgesehene Soll-Tempertur als der vordefinierte Toleranzbetrag abweicht. Beispielsweise kann der Betrag einer Differenz der Ist-Temperatur mit der Soll-Temperatur mit dem Toleranzbetrag verglichen werden, wobei in dem Fall, dass die Differenz größer als der Toleranzbetrag ist, der Teilbereich des Extrudats beziehungsweise des Halbzeugs, der in Kontakt mit dieser Kalanderwalze ist, als Ausschuss identifiziert wird und anderenfalls als kein Ausschuss, das heißt Produkt, identifiziert wird. Wenn eine in der Vereinzelungseinrichtung vereinzelte Platte zumindest einen Teil des Teilbereichs des als Ausschuss identifizierten Halbzeugs aufweist, kann die Absonderungseinrichtung veranlassen, dass diese Platte als Ausschuss von den als Produkt qualifizierenden Platten abgesondert wird. Ein Teil der Fördereinrichtung, der in Förderrichtung stromabwärts hinter der Vereinzelungseinrichtung vorgesehen ist, kann von der Absonderungseinrichtung derart angesteuert sein, dass die als Ausschuss qualifizierenden Platten zu einer anderen Stelle gefördert werden als die als Produkt qualifizierenden Platten.

Vorzugsweise ist die Absonderungseinrichtung hergerichtet aus einer Messung der Ist-Temperatur der mindestens einen Kalanderwalze und der Fördergeschwindigkeit der Fördereinrichtung denjenigen Teil des Endlosgrundprofils, das zuvor einer um den vordefinierten Toleranzbetrags von der Soll-Temperatur abweichenden Ist-Temperatur einer der Kalanderwalzen ausgesetzt war, zu identifizieren. Hierzu kann beispielsweise über einen weiteren Input-Port die von der Fördereinrichtung bereitgestellte durchschnittliche Fördergeschwindigkeit des Halbzeugs zwischen dem Kalander und der Vereinzelungseinrichtung eingelesen und verarbeitet werden. Die Absonderungseinrichtung kann dann aus der Fördergeschwindigkeit berechnen, wo sich der zuvor in dem Kalander als Ausschuss identifizierte Teilbereich des Halbzeugs befindet, insbesondere ob die in der Vereinzelungseinrichtung abgetrennte Platte aus diesem als Ausschuss identifizierte Teilbereich des Halbzeugs hergestellt ist. Dadurch kann mit einer hohen Präzision diejenigen vereinzelten Platten als Ausschuss abgesondert werden, bei denen ohne weitere Prüfung eine nicht ausreichende Qualität angenommen werden kann.

Besonders bevorzugt ist in Förderrichtung hinter der Vereinzelungseinrichtung eine Trenneinrichtung zum, insbesondere spanlosen, Zerteilen der nicht als Ausschuss abgesonderten Platte in einzelne Paneele, insbesondere entlang mindestens einer in Förderrichtung verlaufenden Trennlinie, vorgesehen. Das Zerteilen der als Produkt qualifizierenden Platte in Paneele, beziehungsweise in für die Herstellung von Paneelen vorgesehene Paneelkörper, kann in einem Temperaturbereich stattfinden, der noch im optimalen Temperaturbereich liegt oder leicht darunter liegt. Da die Trenneinrichtung kein Endlosprofil, sondern bereits vereinzelte Platten, vorzugsweise spanlos, bearbeitet, kann auch bei einer niedrigeren Temperatur ein gutes Schnittergebnis mit ebenen Schnittflächen erreicht werden. Statt eines kontinuierlichen Trennens kann die Trenneinrichtung ein batch-artiges Trennen mit Hilfe mindestens eines Messers vorsehen, wobei es aufgrund der geringeren Temperatur leicht möglich ist, die zu trennenden Paneele mit Hilfe mindestens einen Niederhalters anzudrücken, ohne dass eine wellenartige Verformung der Platte und der abzutrennenden Paneele zu befürchten ist. Das Trennen in der Trenneinrichtung kann dadurch mit einer hohen Präzision und einer guten Schnittgüte erfolgen.

Die vereinzelten Platten und/oder Paneele können zum Ende der Fördereinrichtung hin in einer Verpackungseinrichtung, vorzugsweise auf einer Palette, aufgestapelt werden. Die aufgestapelten Platten und/oder Paneele können, insbesondere nach einem Abkühlen auf Umgebungstemperatur einer weiteren, insbesondere spanenden, Bearbeitung zugeführt werden, beispielsweise um in den die Oberseite mit der Unterseite verbindenden Seitenflächen einen Spund-Ansatz, eine Spund-Nut, einen Arretierhaken oder einen Federkörper auszuformen.

Insbesondere stellt die Fördereinrichtung eine Fördergeschwindigkeit vi von 4,5 m/min ≤ vi ≤ 21,0 m/min, insbesondere 5,0 m/min ≤ vi ≤ 8,0 m/min und vorzugsweise vi = 5,5 m min ± 0,5 m/min oder vi = 7,5 m/min ± 0,5 m/min bereit. Diese Fördergeschwindigkeit ermöglicht eine hohe Produktivität ohne in das Halbzeug unnötige innere Spannungen zu induzieren.

Zusätzlich oder alternativ ist die Fördergeschwindigkeit vi derart eingestellt, dass bei einer vorgegebenen Dicke und einer vorgegeben Grundplattenbreite der herzustellenden Platten ein bestimmter, insbesondere im Wesentlichen konstanter, Extruderdurchsatz, beispielsweise 6000 kg/h oder 8500 kg/h, erreicht wird. Die Fördergeschwindigkeit vi kann dadurch an den von dem Extruder bereitstellbaren maximalen Extruderdurchsatz angepasst sein, wodurch eine besonders hohe Produktivität erreicht wird.

Vorzugsweise ist vorgesehen, dass die Fördereinrichtung an einem zu einem Extruder weisenden, insbesondere in einem im Wesentlichen pastösen Zustand vorliegenden, Anfangsbereich des Halbzeugs eine in Förderrichtung weisende Druckkraft und an einem zu der Vereinzelungseinrichtung weisenden, insbesondere in einem im Wesentlichen festen Zustand vorliegenden, Endbereich des Endlosgrundprofil eine in Förderrichtung weisende Zugkraft aufprägt, wobei die angreifenden Druckkräfte und Zugkräfte derart bemessen sind, dass durch Wärmedehnungseffekte während einer Abkühlung des Halbzeugs entstehende Stauchungen und Streckungen zumindest zu einem Großteil kompensiert sind. Hierbei kann insbesondere die Fördergeschwindigkeit entlang der Förderrichtung lokal derart angepasst sein, dass Wärmedehnungseffekte infolge einer entlang der Förderrichtung stattfindenden Abkühlung sowie eine Schrumpfmaß des Halbzeugs in Förderrichtung kompensiert werden können. Die am weichen Ende des Halbzeugs angreifende Druckkraft kann insbesondere durch nachfolgendes den Kalander verlassendes Material des Halbzeugs aufgebaut werden, während die Zugkräfte an den bereits hinreichend verfestigten Bereichen des Halbzeugs durch ein aktiv angreifendes Förderelement der Fördereinrichtung bereitgestellt werden können. Unnötige innere Spannungen in dem Halbzeug können dadurch vermieden werden, so dass eine ungewollte Verformung, beispielsweise eine Wellenbildung, des Halbzeugs vermieden werden kann.

Nachfolgend wird die Erfindung unter Bezugnahme auf die anliegende Zeichnung anhand eines bevorzugten Ausführungsbeispiels exemplarisch erläutert, wobei die nachfolgend dargestellten Merkmale sowohl jeweils einzeln als auch in Kombination einen Aspekt der Erfindung darstellen können. Es zeigt:

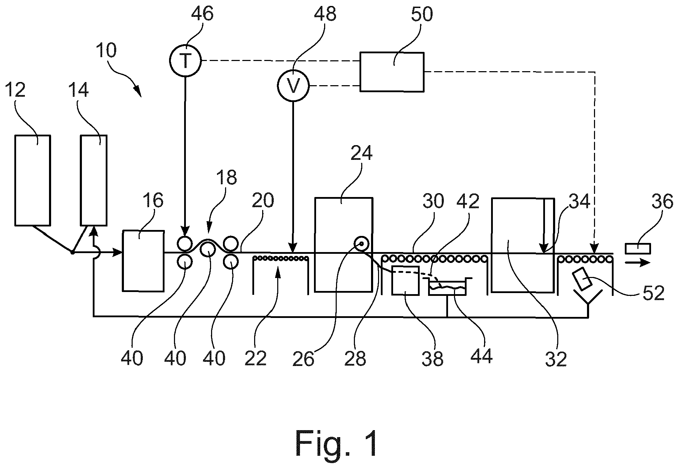

- Fig. 1:: eine schematische Prinzipdarstellung einer Produktionsanlage.

Die in Fig. 1 dargestellte Produktionsanlage 10 weist einen Vorlagebehälter 12 und einen Recyclingbehälter 14 auf, aus denen mindestens ein Extruder 16 oder mehrere Extruder 16 mit einem zu extrudierenden Edukt beaufschlagt werden kann. Der Extruder 16 kann das Edukt über eine Breitschlitzdüse als Extrudat einem Kalander 18 zuführen, so dass nach dem Kalander ein als plattenförmiges Endlosprofil ausgestaltetes Halbzeug 20 vorliegt, das von einer Fördereinrichtung 22, insbesondere mit Hilfe einer nicht dargestellten Abzugseinrichtung, in Förderrichtung mit einer bestimmten Fördergeschwindigkeit abgeführt wird. Hierbei kann das Halbzeug 20, insbesondere durch natürliche Konvektion, während der Förderung abgekühlt werden, wobei die lokale Fördergeschwindigkeit der Fördereinrichtung 22 derart angepasst sein kann, dass Wärmedehnungseffekte durch eine Schrumpfung des Materials des Halbzeugs 20 kompensiert werden können. Das Halbzeug 20 kann von der Fördereinrichtung 22 gegebenenfalls einem Glättwerk zum Glätten einer Oberseite und/oder einer Unterseite des Halbzeugs 20 mit einer definierten Oberflächengüte zugeführt werden. Nach dem gegebenenfalls vorgesehenen Glätten wird das Halbzeug 20 von der Fördereinrichtung 22 einer Kantenschneideinrichtung 24 zugeführt, die insbesondere mit Hilfe eines Rollmessers 26 Randstreifen 28 abtrennt, so dass auf der Fördereinrichtung 22 ein Endlosgrundprofil 30 mit begradigten Seitenkanten und einer definierten Grundplattenbreite quer zur Förderrichtung verbleibt. Insbesondere ist in Förderrichtung nach der Kantenschneideinrichtung eine, insbesondere als Walzenabzug ausgestaltete, Abzugseinrichtung der Fördereinrichtung 22 vorgesehen, mit dessen Hilfe das Endlosgrundprofil 30 von dem Extruder 16 und dem Kalander 18 weggezogen werden kann. Das Endlosgrundprofil 30 wird nachfolgend einer Vereinzelungseinrichtung 32 zugeführt, die insbesondere mit Hilfe eines in Förderrichtung mitbewegten Guillotine-Messers 34 vereinzelte Platten 36 abtrennt, die als Produkt einer Weiterverarbeitung zugeführt werden können. Die Durchschnittstemperatur des Halbzeugs 20 in der Kantenschneideinrichtung 24 und die Durchschnittstemperatur des Endlosgrundprofils 30 in der Vereinzelungseinrichtung 32 liegen beide innerhalb eines vergleichsweise engen optimalen Temperaturbereichs, in dem das Material des Halbzeugs 20 und des Endlosgrundprofils 30 noch warm genug ist, dass aufgrund der noch vorliegenden Duktilität ein mechanischer Widerstand gegen ein Eindringen eines Trennwerkzeugs gering ist, aber bereits hart genug ist, dass das Material nicht an dem Trennwerkzeug kleben bleibt oder sich unter der beim Trennen auftretenden Scherbelastung zu stark verformt.

Die als streifenförmiges Endlosprofile abgetrennten Randbereiche 28 werden einer zugeordneten Zerkleinerungseinrichtung 38 zugeführt, in der die Randbereiche 28 in im Wesentlichen gleich große Randstücke 42 zerkleinert und einem gemeinsamen Sammelbehälter 44 zugeführt werden können. Die Zerkleinerungseinrichtung 38 und der Sammelbehälter 44 sind zwischen der Vereinzelungseinrichtung 32 und der Kantenschneideinrichtung 24 auf einem Höhenniveau unterhalb der Höhe des Endlosgrundprofils 30 vorgesehen. Aus dem Sammelbehälter 44 können die Randstücke 42, beispielsweise mit Hilfe einer Rückfördereinrichtung, dem Recyclingbehälter 14 zugeführt und wiederverwendet werden. Zusätzlich oder alternativ können die abgetrennten und insbesondere gemahlenen Randstücke 42 einem von dem Recyclingbehälter 14 verschiedenen Behälter zugeführt und über eine Dosiereinrichtung dem Extruder 16 als Edukt, vorzugsweise kontinuierlich, zugeführt werden.

Der Kalander 18 weist mehrere temperierte Kalanderwalzen 40 auf, mit deren Hilfe das Extrudat des Extruders 16 zu dem als plattenförmiges Endlosprofil ausgestaltete Halbzeug 20 geformt wird. Hierbei ist es möglich, dass ein Teil der Kalanderwalzen 40 des Kalanders 18 im Wesentlichen nur zum Kühlen des Extrudats verwendet wird. Die Ist-Temperatur der jeweiligen Kalanderwalze 40, vorzugsweise an ihrer Außenseite, wird mit Hilfe eines Temperatursensors 46 gemessen. Zudem wird eine Fördergeschwindigkeit des Halbzeugs 20 mit Hilfe eines Geschwindigkeitssensor 48 gemessen und/oder von der Fördereinrichtung 22 bereitgestellt. Eine Bedienperson der Produktionsanlage 10 kann aus dem Vergleich der Ist-Temperatur mit der Soll-Temperatur identifizieren, welche Teile des Halbzeugs 20 ohne weitere Prüfung als Ausschuss abgesondert werden können. Vorzugsweise erfolgt dies automatisiert, indem die gemessene Ist-Temperatur und die Fördergeschwindigkeit einer Absonderungseinrichtung 50 zugeführt wird. Die Absonderungseinrichtung 50 kann überprüfen, ob die gemessene Ist-Temperatur innerhalb eines Toleranzbereichs zu einer Soll-Temperatur der zugeordneten Kalanderwalze 40 liegt. Wenn dies nicht der Fall ist, kann die Absonderungseinrichtung 50 aus der Fördergeschwindigkeit berechnen, wann derjenige Teilbereich des Halbzeugs 20, der zum Zeitpunkt der Temperaturmessung im Bereich der Kalanderwalze mit der nicht korrekten Temperatur positioniert war, in der Vereinzelungseinrichtung 34 abgetrennt wird. Die Absonderungseinrichtung 50 kann in diesem Fall den der Vereinzelungseinrichtung 34 nachfolgenden Bereich derart steuern, dass die als Ausschuss 52 qualifizierende Platte von den als Produkt qualifizierenden Platten 36 abgesondert wird. Die als Ausschuss 52 qualifizierende Platte kann zerkleinert, aufbereitet und dem Recyclingbehälter 14 zugeführt und wiederverwendet werden.

## Patentansprüche

1. Verfahren zur Absonderung von bei der Herstellung extrudierter Platten (36), insbesondere Paneele zur Abdeckung einer Oberfläche eines Raums, anfallendem Ausschuss (52), bei dem
ein Extrudat eines Extruders (16) einem mehrere temperierte Kalanderwalzen (40) aufweisenden Kalander (18) zugeführt wird,
eine Ist-Temperatur mindestens einer Kalanderwalze (40) gemessen wird,
die Ist-Temperatur mit einer für diese Kalanderwalze (40) vorgesehenen Soll-Temperatur verglichen wird und
in dem Fall, dass eine Differenz zwischen der Ist-Temperatur und der Soll-Temperatur außerhalb eines vordefinierten Toleranzbetrags liegt, ein den Kalander (18) verlassener Teil eines, insbesondere endlosen, Halbzeugs (20) als Ausschuss (52) abgesondert wird.

2. Verfahren nach Anspruch 1 bei dem das den Kalander (18) verlassene Halbzeug (20) einem Glättwerk zum Glätten einer Oberseite und/oder einer Unterseite des Halbzeugs (20), insbesondere mit einer definierten Oberflächengüte, zugeführt wird, wobei das Glätten durch das Glättwerk unterbleibt, wenn der dem Glättwerk zugeführte Teil des Halbzeugs (20) zuvor einer um den vordefinierten Toleranzbetrags von der Soll-Temperatur abweichenden Ist-Temperatur einer der Kalanderwalzen (40) ausgesetzt war.

3. Verfahren nach Anspruch 1 oder 2 bei dem eine Identifizierung als Ausschuss (52) in dem Kalander (18) ausschließlich auf Grundlage der gemessenen Ist-Temperatur der mindestens einen Kalanderwalze (40) erfolgt.

4. Verfahren nach einem der Ansprüche 1 bis 3 bei dem das Halbzeug (20) nach einem Abkühlen und Verfestigen zu einem Endlosgrundprofil (30) einer Vereinzelungseinrichtung (32) zum Abtrennen von vereinzelten Platten (36) von dem Endlosgrundprofil (30), insbesondere entlang einer quer zur Förderrichtung verlaufenden Trennlinie, zugeführt wird, wobei Platten, die aus einem Teil des Endlosgrundprofils (30), das zuvor einer um den vordefinierten Toleranzbetrags von der Soll-Temperatur abweichenden Ist-Temperatur einer der Kalanderwalzen (40) ausgesetzt war, vereinzelt wurden, als Ausschuss (52) abgesondert werden.

5. Verfahren nach Anspruch 4 bei dem der Teil des Endlosgrundprofils (30) in der Vereinzelungseinrichtung (32), das zuvor einer um den vordefinierten Toleranzbetrags von der Soll-Temperatur abweichenden Ist-Temperatur einer der Kalanderwalzen (40) ausgesetzt war, auf Basis einer Fördergeschwindigkeit des Endlosgrundprofils (30) entlang einer Förderrichtung und eines Abstands der Vereinzelungseinrichtung (32) zum Kalander (18) entlang der Förderrichtung identifiziert wird.

6. Verfahren nach einem der Ansprüche 1 bis 5 bei dem das Halbzeug (20) nach einem Abkühlen und Verfestigen zu einem Endlosprofil einer Kantenschneideinrichtung (24) zum Abtrennen eines zur Förderrichtung seitlichen Randbereichs (28) des Halbzeugs (20), so dass in Förderrichtung nach der Kantenschneideinrichtung (24) das Halbzeug (20) als plattenförmiges Endlosgrundprofil (30) mit einer quer zur Förderrichtung verlaufenden vordefinierten Grundplattenbreite vorliegt, zugeführt wird, wobei die in der Kantenschneideinrichtung (24) abgetrennten Randbereiche (42) als Ausschuss (52) abgesondert werden.

7. Verfahren nach einem der Ansprüche 1 bis 6 bei dem der abgesonderte Ausschuss (52), insbesondere im Wesentlichen vollständig, in einen Recyclingbehälter (14) gefördert wird, wobei der Recyclingbehälter (14) zur zumindest teilweisen und/oder zeitweiligen Beaufschlagung eines Extruders (16) zur Erzeugung des Halbzeugs (20) mit einem aus dem Recyclingbehälter (14) stammenden Edukt mit dem Extruder (16) verbindbar ist.

8. Verfahren nach einem der Ansprüche 1 bis 7 bei dem der abgesonderte Ausschuss (52) in mindestens einer Zerkleinerungseinrichtung (38), insbesondere zu schüttfähigen Granulat, zerkleinert wird.

9. Verfahren nach einem der Ansprüche 1 bis 8 bei dem die Ist-Temperatur der Kalanderwalze (40) an einer Außenseite der Kalanderwalze (40) bestimmt wird.

10. Verfahren nach einem der Ansprüche 1 bis 9 bei dem die Ist-Temperatur der Kalanderwalze (40) an mehreren Messstellen der selben Kalanderwalze (40) bestimmt wird, wobei in dem Fall, dass die Differenz zwischen der Ist-Temperatur und der Soll-Temperatur der Kalanderwalze (40) an mindestens einer Messstelle außerhalb des vordefinierten Toleranzbetrags liegt, der den Kalander (18) verlassene Teil des Halbzeugs (20) als Ausschuss (52) abgesondert wird.

11. Verfahren nach einem der Ansprüche 1 bis 10 bei dem die Ist-Temperatur mehrerer, insbesondere sämtlicher, Kalanderwalzen (40) des Kalanders (18) gemessen und mit der zugehörigen Soll-Temperatur verglichen wird, wobei in dem Fall, dass die Differenz zwischen der Ist-Temperatur und der Soll-Temperatur mindestens einer Kalanderwalze (40) außerhalb des vordefinierten Toleranzbetrags liegt, der den Kalander (18) verlassene Teil des Halbzeugs (20) als Ausschuss (52) abgesondert wird.

12. Verfahren nach einem der Ansprüche 1 bis 11 bei dem für den Toleranzbetrag ΔT 0,5 K ≤ ΔT ≤ 10,0 K, insbesondere 1,0 K ≤ ΔT ≤ 5,0 K und vorzugsweise 1,5 K ≤ ΔT ≤ 2,5 K gilt.

13. Verfahren nach einem der Ansprüche 1 bis 11 bei dem ein Abkühlen und Verfestigen des Halbzeugs (20) zu einem, insbesondere plattenförmigen, Endlosgrundprofil (30) ausschließlich durch natürliche Konvektion erfolgt.

14. Produktionsanlage zur Herstellung extrudierter Platten (36), insbesondere für Paneele zur Abdeckung einer Oberfläche eines Raums, mit
einem Extruder (16) zur Erzeugung eines Extrudat,
einem mehrere temperierte Kalanderwalzen (40) aufweisender Kalander (18) zur Erzeugung eines als plattenförmiges Endlosprofil ausgestalteten Halbzeugs (20) aus dem Extrudat, wobei mindestens eine Kalanderwalze (40) einen Temperatursensor (46) zur Messung einer Ist-Temperatur der Kalanderwalze (40) aufweist,
einer Fördereinrichtung (22) zur Förderung des Halbzeugs (20) entlang einer Förderrichtung mit einer definierten Fördergeschwindigkeit,
einer Vereinzelungseinrichtung (32) zum Abtrennen vereinzelter Platten (36) von dem zu einem Endlosgrundprofil (30) verfestigten Halbzeug (20), insbesondere entlang einer quer zur Förderrichtung verlaufenden Trennlinie, und
einer zur Durchführung des Verfahrens nach einem der Ansprüche 1 bis 13 hergerichteten Absonderungseinrichtung (50) zur Absonderung von denjenigen Platten als Ausschuss (52), die aus einem Teil des Endlosgrundprofils (30), das zuvor einer um den vordefinierten Toleranzbetrags von der Soll-Temperatur abweichenden Ist-Temperatur einer der Kalanderwalzen (40) ausgesetzt war, abgetrennt wurden.

15. Produktionsanlage nach Anspruch 14 **dadurch gekennzeichnet, dass** die Absonderungseinrichtung (50) hergerichtet ist aus einer Messung der Ist-Temperatur der mindestens einen Kalanderwalze (40) und der Fördergeschwindigkeit der Fördereinrichtung (22) denjenigen Teil des Halbzeugs (20), das zuvor einer um den vordefinierten Toleranzbetrags von der Soll-Temperatur abweichenden Ist-Temperatur einer der Kalanderwalzen (40) ausgesetzt war, zu identifizieren.

## Claims

1. A method for segregating rejects (52) occurring in the production of extruded plates (36), in particular panels for covering a surface of a room, wherein
an extrudate of an extruder (16) is fed to a calender (18) having several thermoregulated calender rolls (40),
an actual temperature of at least one calender roll (40) is measured,
the actual temperature is compared to a target temperature for this calender roll (40) and, in the case that a difference between the actual temperature and the target temperature is outside a predefined tolerance value, a part of an, in particular endless, semi-finished product (20) leaving the calender (18) is segregated as rejects (52).

2. The method according to claim 1, wherein the semi-finished product (20) leaving the calender (18) is fed to a smoothing machine for smoothing a top side and/or a bottom side of the semi-finished product (20), in particular to a defined surface quality, wherein the smoothing by the smoothing machine is omitted if the part of the semi-finished product (20) fed to the smoothing machine was previously exposed to an actual temperature of one of the calender rolls (40) deviating by the predefined tolerance value from the target temperature.

3. The method according to claim 1 or 2, wherein an identification as rejects (52) in the calender (18) is performed exclusively based on the measured actual temperature of the at least one calender roll (40).

4. The method according to any of the claims 1 to 3, wherein the semi-finished product (20), after cooling and solidifying into a continuous basic profile (30), is fed to a singulation device (32) for separating singulated plates (36) from the continuous basic profile (30), in particular along a dividing line extending transverse to the direction of conveyance, wherein plates that have been singulated from a part of the continuous basic profile (30), which was previously exposed to an actual temperature of one of the calender rolls (40) deviating by a predefined tolerance value from the target temperature, are segregated as rejects (52).

5. The method according to claim 4, wherein the part of the continuous basic profile (30) in the singulation device (32), which was previously exposed to an actual temperature deviating by a predefined tolerance value from the target temperature of one of the calender rolls (40), is identified based on a conveyance speed of the continuous basic profile (30) along a direction of conveyance and a distance of the singulation device (32) to the calender (18) along the direction of conveyance.

6. The method according to any of the claims 1 to 5, wherein the semi-finished product (20), after cooling and solidifying into a continuous profile, is fed to an edge cutting device (24) for cutting off an, in the direction of conveyance, lateral peripheral area (28) of the semi-finished product (20) such that, downstream of the edge cutting device (24) in the direction of conveyance, the semi-finished product (20) is present as a plate-shaped continuous basic profile (30) with a predefined base plate width extending transverse to the direction of conveyance, wherein the peripheral areas (42) cut off in the edge cutting device (24) are segregated as rejects (52).

7. The method according to any of the claims 1 to 6, wherein the segregated rejects (52) are, in particular essentially completely, conveyed into a recycling container (14), wherein the recycling container (14) is able to be connected to an extruder (16) to at least partially and/or temporarily supply feedstock originating from the recycling container (14) to the extruder (16) for the production of the semi-finished product (20).

8. The method according to any of the claims 1 to 7, wherein the segregated rejects (52) are crushed in at least one crushing device (38), in particular into pourable granulate.

9. The method according to any of the claims 1 to 8, wherein the actual temperature of the calender roll (40) is determined at an outer side of the calender roll (40).

10. The method according to any of the claims 1 to 9, wherein the actual temperature of the calender roll (40) is determined at multiple measuring points of the same calender roll (40), wherein, in the case that the difference between the actual temperature and the target temperature of the calender roll (40) is outside the predefined tolerance value at at least one measuring point, the part of the semi-finished product (20) that has left the calender (18) is segregated as rejects (52).

11. The method according to any of the claims 1 to 10, wherein the actual temperatures of several, in particular all, calender rolls (40) of the calender (18) are measured and compared with their corresponding target temperatures, wherein, in the case that the difference between the actual temperature and the target temperature of at least one calender roll (40) is outside the predefined tolerance value, the part of the semi-finished product (20) that has left the calender (18) is segregated as rejects (52).

12. The method according to any of the claims 1 to 11, wherein the tolerance value ΔT satisfies 0.5 K ≤ ΔT ≤ 10.0 K, in particular 1.0 K ≤ ΔT ≤ 5.0 K, and preferably 1.5 K ≤ ΔT ≤ 2.5 K.

13. The method according to any of the claims 1 to 11, wherein a cooling and solidifying of the semi-finished product (20) into a, in particular plate-shaped, continuous basic profile (30) is performed exclusively by natural convection.

14. A production plant for manufacturing extruded plates (36), in particular for panels for covering a surface of a room, including
an extruder (16) for generating an extrudate,
a calender (18) having several thermoregulated calender rolls (40) for generating a semi-finished product (20) configured as a plate-shaped continuous profile from the extrudate, wherein at least one calender roll (40) has a temperature sensor (46) for measuring an actual temperature of the calender roll (40),
a conveying device (22) for conveying the semi-finished product (20) along a direction of conveyance at a defined conveyance speed,
a singulation device (32) for separating singulated plates (36) from the semi-finished product (20) solidified into a continuous basic profile (30), in particular along a dividing line extending transverse to the direction of conveyance, and
a segregation device (50) configured for performing the method according to any of the claims 1 to 13 for segregating the plates as rejects (52) that were separated from a part of the continuous basic profile (30) that was previously exposed to an actual temperature of one of the calender rolls (40) deviating by a predefined tolerance value from the target temperature.

15. The production plant according to claim 14, **characterized in that** the segregation device (50) is configured to identify from a measurement of the actual temperature of the at least one calender roll (40) and the conveyance speed of the conveying device (22) the part of the semi-finished product (20) that was previously exposed to an actual temperature of one of the calender rolls (40) deviating by a predefined tolerance value from the target temperature.

## Revendications

1. Procédé de séparation de rebuts (52) résultant de la production de plaques extrudées (36), en particulier des plaques destinées à recouvrir la surface d'une pièce, dans lequel
un extrudat provenant d'une extrudeuse (16) est introduit dans une calandre (18) comportant plusieurs de rouleaux de calandre (40) thermorégulés,
une température réelle d'au moins un rouleau de calandre (40) est mesurée,
la température réelle est comparée à une température cible prévue pour ce rouleau de calandre (40) et, dans le cas où une différence entre la température réelle et la température cible se situe en dehors d'une valeur de tolérance prédéfinie, une partie d'un produit semi-fini (20), en particulier continue, sortant de la calandre (18), est séparée en tant que rebuts (52).

2. Procédé selon la revendication 1, dans lequel le produit semi-fini (20) sortant de la calandre (18) est introduit dans une calandre pour lisser une face supérieure et/ou une face inférieure du produit semi-fini (20), notamment jusqu'à une qualité de surface définie, dans lequel le lissage par la calandre est interrompu si la partie du produit semi-fini (20) introduite dans la calandre a été préalablement exposée à une température réelle de l'un des rouleaux de calandre (40) s'écartant de la valeur de tolérance prédéfinie par rapport à la température cible.

3. Procédé selon la revendication 1 ou 2, dans lequel une identification des rebuts (52) dans la calandre (18) est effectuée exclusivement sur la base de la température réelle mesurée d'au moins un rouleau de calandre (40).

4. Procédé selon l'une quelconque des revendications 1 à 3, dans lequel le produit semi-fini (20) après refroidissement et solidification en un profilé de base continu (30), est introduit dans un dispositif de séparation (32) destiné à séparer des plaques extrudées (36) du profilé de base continu (30), en particulier le long d'une ligne de séparation s'étendant transversalement à la direction de transport, dans lequel des plaques qui ont été séparées d'une partie du profilé de base continu (30), qui a été précédemment exposée à une température réelle de l'un des rouleaux de calandre (40) s'écartant d'une valeur de tolérance prédéfinie par rapport à la température cible, sont séparées en tant que de rebuts (52).

5. Procédé selon la revendication 4, dans lequel la partie du profilé de base continu (30) dans le dispositif de séparation (32), qui a été précédemment exposée à une température réelle s'écartant d'une valeur de tolérance prédéfinie par rapport à la température cible de l'un des rouleaux de calandre (40), est identifiée sur la base d'une vitesse de transport du profilé de base continu (30) le long d'une direction de transport et d'une distance entre le dispositif de séparation (32) et la calandre (18) le long de la direction de transport.

6. Procédé selon l'une quelconque des revendications 1 à 5, dans lequel le produit semi-fini (20), après refroidissement et solidification en un profilé continu, est introduit dans un dispositif de coupe de bord (24) pour couper, dans la direction de transport, une zone de bord latérale (28) du produit semi-fini (20) de sorte qu'en aval du dispositif de coupe de bord (24) dans la direction de transport, le produit semi-fini (20) se présente sous la forme d'un profilé de base continu (30) en forme de plaque avec une largeur de plaque de base prédéfinie s'étendant transversalement dans la direction de transport, dans lequel les zones de bord (42) coupées dans le dispositif de coupe de bord (24) sont séparées en tant que rebuts (52).

7. Procédé selon l'une des revendications 1 à 6, dans lequel les rebuts séparés (52), sont, en particulier essentiellement intégralement, envoyés dans un conteneur de recyclage (14), dans lequel le conteneur de recyclage (14) peut être connecté à une extrudeuse (16) pour fournir au moins partiellement et/ou temporairement une charge d'alimentation provenant du conteneur de recyclage (14) à l'extrudeuse (16) pour la production du produit semi-fini (20).

8. Procédé selon l'une quelconque des revendications 1 à 7, dans lequel les rebuts séparés (52) sont broyés dans au moins un dispositif de broyage (38), notamment en granulés en vrac.

9. Procédé selon l'une quelconque des revendications 1 à 8, dans lequel la température réelle du rouleau de calandre (40) est déterminée sur un côté extérieur du rouleau de calandre (40).

10. Procédé selon l'une quelconque des revendications 1 à 9, dans lequel la température réelle du rouleau de calandre (40) est déterminée en plusieurs points de mesure du même rouleau de calandre (40), dans lequel, dans le cas où la différence entre la température réelle et la température cible du rouleau de calandre (40) est en dehors de la valeur de tolérance prédéfinie en au moins un point de mesure, la partie du produit semi-fini (20) sortant de la calandre (18) est séparée en tant que rebuts (52).

11. Procédé selon l'une quelconque des revendications 1 à 10, dans lequel les températures réelles de plusieurs, en particulier de tous, rouleaux de calandre (40) de la calandre (18) sont mesurées et comparées à leurs températures cibles correspondantes, dans lequel, dans le cas où la différence entre la température réelle et la température cible d'au moins un rouleau de calandre (40) se trouve en dehors de la valeur de tolérance prédéfinie, la partie du produit semi-fini (20) qui sort de la calandre (18) est séparée en tant que rebuts (52).

12. Procédé selon l'une quelconque des revendications 1 à 11, dans lequel la valeur de tolérance ΔT satisfait à 0.5 K ≤ ΔT ≤ 10.0 K, en particulier à 1.0 K ≤ ΔT ≤ 5.0 K, et, de préférence à 1.5 K ≤ ΔT ≤ 2.5 K.

13. Procédé selon l'une quelconque des revendications 1 à 11, dans lequel le refroidissement et la solidification du produit semi-fini (20) en un profile de base continu (30), notamment en forme de plaque, sont réalisés exclusivement par convection naturelle

14. Système de production de plaques extrudées (36), en particulier des plaques destinées à recouvrir la surface d'une pièce, y compris une extrudeuse (16) permettant de produire un extrudat, une calandre (18) comprenant plusieurs rouleaux de calandre (40) thermorégulés pour produire un produit semi-fini (20) conçu sous la forme d'un profilé continu en forme de plaque à partir de l'extrudat, dans lequel au moins un rouleau de calandre (40) comporte un capteur de température (46) pour mesurer une température réelle du rouleau de calandre (40), un dispositif de transport (22) pour transporter le produit semi-fini (20) le long d'un direction de transport à une vitesse de transport définie, un dispositif de séparation (32) pour séparer les plaques (36) séparées du produit semi-fini (20) solidifié en un profilé de base continu (30), en particulier le long d'une ligne de séparation s'étendant transversalement à la direction de transport, et un dispositif de séparation (50) configuré pour mettre en oeuvre le procédé selon l'une quelconque des revendications 1 à 13 pour séparer les plaques en tant que rebuts (52) qui ont été séparés à partir d'une partie du profilé de base continu (30) qui a été préalablement exposée à une température réelle de l'un des rouleaux de calandre (40) s'écartant d'une valeur de tolérance prédéfinie par rapport à la température cible.

15. Système d'installation de production selon la revendication 14, **caractérisé en ce que** le dispositif de séparation (50) est configuré pour identifier, à partir d'une mesure de la température réelle d'au moins un rouleau de calandre (40) et de la vitesse de transport du dispositif de transport (22), la partie du produit semi-fini (20) qui a été précédemment exposée à une température réelle de l'un des rouleaux de calandre (40) s'écartant d'une valeur de tolérance prédéfinie par rapport à la température cible.
